# EUROPÄISCHE PATENTSCHRIFT

(11) **EP 2 421 421 B1**
(45) Veröffentlichungstag und Bekanntmachung des Hinweises auf die Patenterteilung: **03.04.2013**
(21) Anmeldenummer: 10744669.2
(22) Anmeldetag: 21.05.2010
(51) Int. Cl.: A47J 43/14

(54) **VORRICHTUNG ZUM TRENNEN DES EIGELBS VOM EIWEISS EINES AUFGESCHLAGENEN EIES**
DEVICE FOR SEPARATING THE EGG YOLK FROM THE EGG WHITE OF A CRACKED EGG
DISPOSITIF DE SÉPARATION D'UN JAUNE DU BLANC D'UN OEUF CASSÉ

(30) Priorität: 26.05.2009 DE 102009022654; 16.09.2009 DE 102009041766
(43) Veröffentlichungstag der Anmeldung: 29.02.2012
(73) Patentinhaber: Neo-plastic Dr. Doetsch Diespeck GmbH, 91456 Diespeck (DE)
(72) Erfinder: HOCK, Edward, 91466 Gerhardshofen (DE); FREIHERR VON UND ZU FRANCKENSTEIN, Hubertus, 91085 Weisendorf (DE); FREIHERR VON TWICKELN, Patrick, 91413 Neustadt/Aisch (DE)
(74) Vertreter: Führing, Dieter
(86) Internationale Anmeldenummer: PCT/EP2010/003128
(87) Internationale Veröffentlichungsnummer: WO 2010/136158

(56) Entgegenhaltungen:
- US-A- 2 827 936
- US-A- 3 331 414

## Beschreibung

Die Erfindung betrifft eine Vorrichtung zum Trennen des Eigelbs vom Eiweiß eines aufgeschlagenen rohen Eies, mit einer Auffangschale für das aufgeschlagene Ei, die einen Schalenboden und eine vom Schalenboden nach oben stehende Schalenwandung aufweist, wobei vom Schalenboden ein Rückhalteelement für das Eigelb nach oben steht und das Rückhalteelement von der Schalenwandung beabstandet ist.

Zum Trennen des Eigelbs vom Eiweiß eines aufgeschlagenen rohen Eies sind eine Vielzahl Vorrichtungen an sich bekannt.

Beispielsweise beschreibt die DE 420 152 eine solche Vorrichtung, die aus einem Becher besteht, der über seinem Boden in dessen Nachbarschaft mit einem teilringförmigen Schlitz ausgebildet ist. Der Inhalt des aufgeschlagenen rohen Eies wird in den Becher eingebracht. Das Eiweiß fließt durch den teilringförmigen Schlitz und kann beispielsweise in einem unter dem Becher befindlichen Behälter aufgefangen werden. Das Eigelb verbleibt währenddessen im Becher und kann dann aus diesem z. B. in einen dafür vorgesehenen Behälter ausgegeben werden.

Die DE 501 246 offenbart eine gattungsgemäße Vorrichtung, die als Becher ausgebildet ist, der eine schlitzförmige Abflußöffnung für das Eiweiß und eine über der schlitzförmigen Abflußöffnung vorgesehene Leitfläche aufweist. Die Leitfläche begrenzt einen zur schlitzförmigen Abflußöffnung hin verjüngten Kanal.

Die DE 1 867 573 U1 beschreibt eine gattungsgemäße Vorrichtung, die einen schalenförmigen Behälter mit einer zentralen Öffnung aufweist. Der zentralen Öffnung ist ein Napf zugeordnet, der das Eigelb eines rohen Eies aufnimmt, während das Eiweiß über den Rand des Napfes durch einen Ringschlitz zwischen dem Rand des Napfes und dem Rand der zentralen Öffnung abfließt.

Eine ähnliche Vorrichtung zum Trennen des Eigelbs vom Eiweiß eines aufgeschlagenen rohen Eies ist beispielsweise auch aus der DE 1 934 274 U1 bekannt. Bei dieser bekannten Vorrichtung ist der zentrale Napf in Gestalt einer Kugelhalbschale an der tiefsten Stelle mit einer Luftaustrittsöffnung ausgebildet.

Eine gattungsgemäße Vorrichtung mit einem becherartigen Oberteil und einem napfartigen Unterteil ist aus der CH 533 445 bekannt. Auch diese bekannte Vorrichtung ist im Übergang zwischen dem becherartigen Oberteil und dem unterseitigen Napf mit schlitzförmigen Durchbrechungen ausgebildet, durch welche das vom Eigelb getrennte Eiweiß abfließen kann.

Die DE 298 06 280 U1 offenbart eine gattungsgemäße Vorrichtung, die einen Schalenmantel und eine bewegliche Auffangschale aufweist, die mit ihrem Umfangsrand auf einer Sitzfläche des Schalenmantels aufliegt. Durch eine Bewegung der Auffangschale kann am Umfang des Schalenmantels eine Öffnung gebildet werden, durch welche das Eiweiß abfließen kann, während das Eigelb in der Auffangschale verbleibt.

Eine Vorrichtung zum Trennen des Eigelbs vom Eiweiß eines aufgeschlagenen rohen Eies ist beispielsweise auch aus der DE 298 16 010 U1 bekannt. Diese bekannte Vorrichtung ist als Topf gestaltet, der einen nach unten gebogenen Schlitz aufweist. Durch seitliches Kippen fließt das Eiweiß durch den Schlitz, während das Eigelb im Topf zurückbleibt.

Allen diesen bekannten Vorrichtungen zum Trennen des Eigelbs vom Eiweiß eines aufgeschlagenen rohen Eies ist gemeinsam, dass sie mindestens einen Schlitz aufweisen, durch welchen das Eiweiß aus der Vorrichtung ausfließt, während das Eigelb in der Vorrichtung verbleibt. Solche Schlitze bedingen jedoch Ecken. Kanten o.dgl., in welchen Reste des Ei-Inhaltes verbleiben können. Das ist unter Hygiene-Gesichtspunkten ein nicht zu vernachlässigender Mangel, weil solche Ei-Reste für Bakterien einen Nährboden bilden. Außerdem ist nicht zuverlässig auszuschließen, dass die das Eigelb umschließende Totterhaut an den Ecken oder Kanten aufplatzt, so dass die gewünschte Trennung des Eiweiß vom Eigelb nicht gegeben ist

Entsprechendes gilt auch für die aus der DE 618 290 T2 bekannte gattungsgemäße Vorrichtung, die aus einem Drahtmaterial mit einem becherförmigen Abschnitt zum Aufnehmen des Inhaltes eines aufgeschlagenen rohen Eies besteht. Der becherförmige Aufnahmeabschnitt kann die Gestalt einer Halbkugel aufweisen. Diese bekannte Eier-Trennvorrichtung weist also einen sehr langen spiralschraubenlinienförmigen Schlitz auf, durch welchen das Eiweiß ausfließt, während das Eigelb im becherförmigen Aufnahmeabschnitt verbleiben soll.

Eine Vorrichtung zum Trennen des Eigelbs vom Eiweiß eines aufgeschlagenen Eies beschreibt beispielsweise auch die EP 1 733 666 A1. Diese bekannte Vorrichtung weist einen Becher sowie einen vom Becher seitlich wegstehenden Schalenabschnitt auf. Der Schalenabschnitt ist mit schlitzförmigen Löchern ausgebildet, durch welche das Eiweiß austritt, während das Eigelb in dem Schalenabschnitt verbleibt.

Auch bei diesen zuletzt genannten Vorrichtungen dienen also Schlitze dazu, das Eiweiß aus der Vorrichtung auszugeben, während das Eigelb in der Vorrichtung verbleiben soll. Die weiter oben zu den Schlitzen erwähnten Mängel gelten hier entsprechend.

Eine Trenn-Vorrichtung der eingangs genannten Art ist aus der US 3 331 414 A bekannt. Bei dieser bekannten Trenn-Vorrichtung ist das Rückhalteelement an der Auffangschale permanent oder loslösbar angebracht. D.h. diese bekannte Vorrichtung besteht - unabhängig davon, ob das Rückhalteelement an der Auffangschale permanent oder loslösbar angebracht ist - aus zwei Teilen, nämlich der Auffangschale und dem Rückhalteelement. Das Rückhalteelement ist mit einer flachen Rückwand ausgebildet, mit der das Rückhalteelement an der ebenflächigen Basis der Auffangschale eng anliegt. Die flache Rückwand des Rückhalteelementes bildet mit der ebenflächigen Basis der Auffangschale - bedingt durch die Wanddicke der Rückwand - eine Stufe, an der unerwünschte Rückstände eines aufgeschlagenen Eies kaum bzw. nicht zu verhindern sind. Außerdem ist an dieser Stufe eine Beschädigung bzw. Zerstörung des Eigelbs nicht sicher auszuschließen. Zur Beseitigung solcher unerwünschter Ei-Rückstände ist das Rückhalteelement an der Auffangschale vorzugsweise loslösbar angebracht, um die beiden Teile der Trenn-Vorrichtung, d.h. die Auffangschale und das Rückhalteelement, voneinander getrennt reinigen zu können. Schwieriger ist die Reinigung dieser bekannten Trenn-Vorrichtung, wenn das Rückhalteelement mit der Auffangschale permanent verbunden ist, weil dann die durch die Wanddicke der Rückwand mit der Basis gebildete Stufe permanent vorhanden ist. Unabhängig davon, ob das Rückhalteelement mit der Auffangschale permanent oder loslösbar verbunden ist, handelt es sich bei dieser bekannten Trenn-Vorrichtung um eine zweiteilige Ausbildung, so dass zu ihrer Herstellung zwei Formwerkzeuge benötigt werden. Das stellt einen nicht zu vernachlässigenden Mangel dar. Ein weiterer Mangel dieser bekannten Trenn-Vorrichtung besteht darin, dass die Montage des Rückhalteelementes an der Auffangschale einen nicht zu vernachlässigenden Aufwand darstellt.

Der Erfindung liegt die Aufgabe zugrunde, eine Vorrichtung der eingangs genannten Art zu schaffen, die vergleichsweise einfach mit einem einfachen Werkzeug herstellbar ist, mit der es einfach, zuverlässig und sicher möglich ist, das Eigelb vom Eiweiß eines aufgeschlagenen rohen Eies zu trennen, und die einfach zu reinigen ist.

Diese Aufgabe wird erfindungsgemäß durch die Merkmale des Anspruches 1, d.h. dadurch gelöst, dass die Auffangschale mit dem Rückhalteelement materialeinstückig ausgebildet ist.

Durch die materialeinstückige Ausbildung der Auffangschale mit dem Rückhalteelement wird eine Stufe und somit eine Hohlkante im Übergang zwischen dem Rückhalteelement und der Auffangschale vermieden, so dass unerwünschte Rückstände von Eiweiß bzw. Eigelb eines aufgeschlagenen rohen Eies vermieden bzw. in einfacher Weise beseitigt werden können. Auch die Herstellung der materialeinstückig aus der Auffangschale und dem Rückhalteelement gebildeten Trenn-Vorrichtung in einem einzigen Formwerkzeug ist vergleichsweise einfach möglich.

Zweckmäßig kann es sein, wenn das Rückhalteelement relativ zur Schalenwandung in einem mittleren Bereich des Schalenbodens vorgesehen ist und von diesem nach oben steht. Dabei kann das Rückhalteelement vom Schalenboden senkrecht nach oben stehen. Vorteilhaft kann es jedoch sein, wenn das Rückhalteelement mit dem Schalenboden einen Winkel einschließt, der geringfügig kleiner als 90° ist, weil dann beim Ausgeben des Eiweiß aus der Auffangschale das Eigelb zuverlässig durch das Rückhalteelement zurückgehalten wird.

Erfindungsgemäß kann das Rückhalteelement zungenförmig mit einer das Eigelb zurückhaltenden Innenfläche ausgebildet sein, d.h. die besagte Innenfläche des Rückhalteelementes kann in Ebenen, die zum Schalenboden parallel orientiert sind, konkav profiliert sein.

Besonders vorteilhaft kann es sein, wenn das Rückhalteelement löffelabschnittförmig ausgebildet ist, wobei die das Eigelb zurückhaltende Innenfläche des Rückhalteelementes nicht nur zu Ebenen, die zum Schalenboden parallel orientiert sind, konkav profiliert ist, sondern außerdem auch in zum Schalenboden senkrecht orientierten Ebenen konkav profiliert ist.

Bei dem Material für die erfindungsgemäße Trenn-Vorrichtung kann es sich um ein Metall, wie Edelstahl, um Porzellan oder Keramik, um ein Kunststoffmaterial o.dgl. handeln. Bevorzugt ist es, wenn die erfindungsgemäße Vorrichtung spülmaschinenfest, d.h. zur Reinigung in Spülmaschinen geeignet ist.

Zum Aufschlagen eines rohen Eies kann bei der erfindungsgemäßen Trenn-Vorrichtung die Schalenwandung der Auffangschale oberseitig und/oder das vom Schalenboden nach oben stehende Rückhalteelement für das Eigelb oberseitig mit einem scharfkantigen Aufschlagrandabschnitt ausgebildet sein. Desgleichen ist es möglich, dass die Auffangschale mit einem umlaufenden Verschlußrand für ein temporär luftdicht verrast- und verschließbares Behältnis (-Tupperware®) ausgebildet ist.

Zweckmäßig kann es sein, wenn der Schalenboden mit einer Rinne für das Eigelb ausgebildet ist, die sich von der Eigelb zurückhaltenden Innenfläche des Rückhalteelementes bis zum zugehörigen, gegenüberliegenden Abschnitt der Schalenwandung der Auffangschale erstreckt. Entlang dieser Rinne kann dann das vom Eiweiß getrennte Eigelb - nach der Ausgabe des Eiweiß aus der Auffangschale - gezielt zum zuletzt genannten Abschnitt der Schalenwandung der Auffangschale gelenkt und von dort aus der Auffangschale ausgegeben werden.

Zur genau definierten Ausgabe des Eiweiß und/oder des Eigelbs kann es vorteilhaft sein, wenn die Schalenwandung der Auffangschale der erfindungsgemäßen Trenn-Vorrichtung mit einem Ausgieß-Schnabelbereich für das Einweiß und/oder mit einem Ausgieß-Schnabelbereich für das Eigelb ausgebildet ist.

Zum Trennen des Eigelbs vom Eiweiß eines aufgeschlagenen, rohen Eies wird die erfindungsgemäße Vorrichtung beispielsweise wie folgt benutzt:

Das rohe Ei wird in an sich bekannter Weise aufgeschlagen. Der Inhalt des Eies wird dann in die mindestens annähernd horizontal positionierte Auffangschale im Bereich zwischen der Innenfläche des Rückhalteelementes und der dieser gegenüberliegenden Schalenwandung eingebracht, d.h. eingegossen. Anschließend wird die Auffangschale leicht geneigt, so dass der Inhalt des Eies zum Rückhalteelement, d.h. zu dessen Innenfläche hin fließt. Dabei fließt dann das Eiweiß beidseitig an dem mittig vorgesehenen Rückhalteelement vorbei, während das Eigelb am Rückhalteelement bzw. an dessen Innenfläche verbleibt. Durch weiteres Neigen der Auffangschale kann dann das Eiweiß aus der Auffangschale ausgegeben werden, während das Eigelb weiterhin am Rückhalteelement bzw. an der Innenfläche des - vorzugsweise löffelabschnittförmigen - Rückhalteelementes verbleibt. Nach der Ausgabe des Eiweiß aus der Auffangschale kann dann durch Zurückschwenken der Auffangschale auch das Eigelb aus der Auffangschale ausgegeben werden.

Die erfindungsgemäße Vorrichtung weist den Vorteil auf, dass sie mit einer Hand problemlos gehandhabt werden kann, d.h. einhändig bedienbar ist, wobei das Trennen des Eigelbs vom Eiweiß einfach, zeitsparend und sicher möglich ist. Weitere Vorteile bestehen darin, dass zur Lagerung der erfindungsgemäßen Vorrichtung kein besonderer Lagerplatz erforderlich ist, dass bei der Benutzung der Vorrichtung keine besonderen Vorbereitungen nötig sind, und dass seine Reinigung einfach und zuverlässig möglich ist, was unter Hygienegesichtspunkten vorteilhaft ist.

Erfindungsgemäß ist es auch möglich, dass von einem Randabschnitt der Auffangschale für das aufgeschlagene Ei oder in der Nachbarschaft des Randabschnittes, gegen diesen in die Auffangschale hinein zurückversetzt, das Rückhalteelement für das Eigelb nach oben steht.

Bei der erfindungsgemäßen Trenn-Vorrichtung kann der Rand der Auffangschale in sich geschlossen oder in der Nachbarschaft des Rückhalteelementes offen ausgebildet sein.

Erfindungsgemäß kann die Auffangschale mit einem geradlinigen Teilrandabschnitt ausgebildet sein, wobei das Rückhalteelement von einem mittleren Bereich dieses Teilrandes oder gegen diesen in die Auffangschale hinein zurückversetzt nach oben stehen kann.

Die Auffangschale kann mit einem runden, ovalen oder beliebig anders geformten Rand ausgebildet sein.

Unter Handhabungsgesichtspunkten kann es zweckmäßig sein, wenn von der Auffangschale ein Handgriff wegsteht. Eine andere Möglichkeit besteht bspw. darin, dass die Auffangschale mit mindestens einem Griffteil ausgebildet ist. Dieses mindestens eine Griffteil kann z.B. am Rand der Auffangschale vorgesehen sein. Desgleichen ist es möglich, dass das mindestens eine Griffteil an der Rückseite der Auffangschale ausgebildet ist

Weitere Einzelheiten, Merkmale und Vorteile ergeben sich aus der nachfolgenden Beschreibung von in der Zeichnung perspektivisch dargestellten Ausführungsbeispielen der erfindungsgemäßen Vorrichtung, wobei es sich versteht, dass die Erfindung nicht auf die gezeichneten Ausführungsbeispiele beschränkt sondern durch die nachfolgenden Ansprüche definiert ist.

Es zeigen:
Figur 1 eine erste Ausführungsform der Vorrichtung zum Trennen des Eigelbs vom Eiweiß eines aufgeschlagenen rohen Eies,
Figur 2 eine zweite Ausführungsform der Trenn-Vorrichtung,
Figur 3 eine dritte Ausführungsform der Trenn-Vorrichtung,
Figur 4 eine vierte Ausführungsform der Trenn-Vorrichtung,
Figur 5 eine der Figur 2 ähnliche Ausbildung der Trenn-Vorrichtung, wobei der Rand der Auffangschale nicht in sich geschlossen sondern in der Nachbarschaft des Rückhalteelementes offen ausgebildet ist,
Figur 6 eine der Figur 5 ähnliche Ausbildung der Trenn-Vorrichtung mit in der Nachbarschaft des Rückhaltelementes offenem Rand der Auffangschale, und
Figur 7 eine Ausbildung der Trenn-Vorrichtung mit in der Nachbarschaft des Rückhalteelementes offenem Randabschnitt der Auffangschale, wobei das Rückhalteelement in der Nachbarschaft des offenen Randes, gegen diesen in die Auffangschale hinein zurückversetzt, vorgesehen ist.

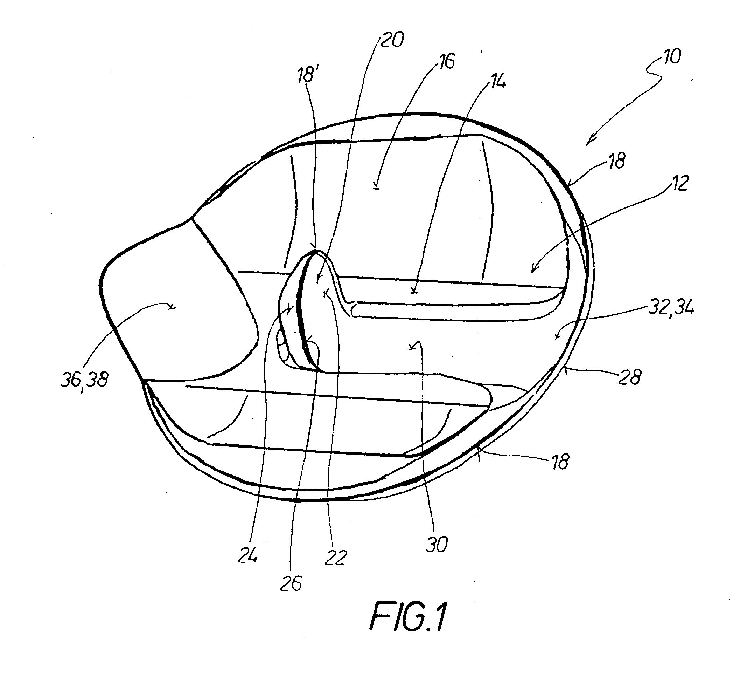

Figur 1 zeigt eine erste Ausführungsform der Vorrichtung 10 zum Trennen des Eigelbs vom Eiweiß eines aufgeschlagenen rohen Eies. Die Vorrichtung, 10 weist eine Auffangschale 12 mit einem Schalenboden 14 auf, von dessen Umfangsrand eine Schalenwandung 16 nach oben steht.

Die Schalenwandung 16 ist mit Aufschlagrandabschnitten 18 ausgebildet, an welchen ein rohes Ei aufgeschlagen werden kann, um dann mit Hilfe der Vorrichtung 10 das Eigelb vom Eiweiß zu trennen. Zu diesem Zwecke steht vom Schalenboden 14 ein Rückhalteelement 20 für das Eigelb nach oben Das Rückhalteelement 20 weist eine Innenfläche 22 und eine Rückenfläche 24 auf. Die Innenfläche 22 und die Rückenfläche 24 bestimmen einen Rand 26 des Rückhaltelementes 20. Der Rand 26 des Rückhalteelementes 20 ist von der Schalenwandung 16 beidseitig gleichmäßig beabstandet, d.h. das Rückhalteelement 20 ist - in Bezug zur Schalenwandung - in einem mittleren Bereich der Auffangschale 12, d.h. des Schalenbodens 14, vorgesehen. Der Rand 26 kann oberseitig einen scharfkantigen Aufschlagrandabschnitt 18' aufweisen.

Das Rückhalteelement 20 ist löffelabschnittförmig ausgebildet. Die Innenfläche 22 des das Eigelb zurückhaltenden Rückhalteelementes 20 ist in Ebenen, die zum Schalenboden 14 parallel orientiert sind, konkav profiliert. Außerdem ist die besagte Innenfläche 22 in zum Schalenboden 14 senkrechten Ebenen konkav profiliert.

Das Rückhalteelement 20 ist mit der Auffangschale 12 der Vorrichtung 10 materialeinstückig ausgebildet.

Die Schalenwandung 16 der Auffangschale 12 kann mit einem umlaufenden Verschlußrand 28 ausgebildet sein, der zum temporären luftdichten Verrasten und Verschließen eines Behältnisses nach Art einer Tupperware® vorgesehen sein kann.

Der Schalenboden 14 ist mit einer Rinne 30 ausgebildet. Die Rinne 30 weist eine lichte Breite auf, die der Breite des löffelabschnittförmigen Rückhalteelementes 20 an dessen Wurzel, d.h. im Übergang zwischen dem Rückhalteelement 20 und dem Schalenboden 14, entspricht. Die Rinne 30 erstreckt sich von der das Eigelb zurückhaltenden Innenfläche 22 des löffelabschnittförmigen Rückhalteelementes 20 bis zu dem der Innenfläche 22 zugewandten, gegenüberliegenden Abschnitt 32 der Schalenwandung 16 der Auffangschale 12. Der besagte Abschnitt 32 ist mit einem Ausgieß-Schnabelbereich 34 für das Eigelb ausgebildet.

Der der Rückenfläche 24 des Rückhalteelementes 20 zugewandte, gegenüberliegende Abschnitt 36 der Schalenwandung 16 ist mit einem Ausgieß-Schnabelbereich 38 für das Eiweiß ausgebildet.

Wie bereits weiter oben ausgeführt worden ist, kann die Trenn- Vorrichtung gemäß Figur 1 wie folgt benutzt werden:

An einem Aufschlagrandabschnitt18, 18' kann das Ei, dessen Eigelb vom Eiweiß getrennt werden soll, aufgeschlagen werden. Der Inhalt des aufgeschlagenen Eies wird in die horizontal positionierte Auffangschale 10 im Bereich zwischen dem Rückhalteelement 20, bzw. dessen Innenfläche 22, und dem der Innenfläche 22 zugewandten, gegenüberliegenden Abschnitt 32 der Schalenwandung16 eingebracht. Nach dem Einbringen des Inhaltes des aufgeschlagenen Eies wird die Auffangschale 12 aus der horizontalen Lage - in der Zeichnung im entgegengesetzten Uhrzeigersinn - geringfügig hochgeschwenkt, so dass der Inhalt des aufgeschlagenen Eies zum Rückhalteelement 20 hin fließt, wobei dann das Eiweiß beidseitig um das Rückhalteelement 20 herum in Richtung zum Abschnitt 36 der Schalenwandung 16, d.h. in Richtung zum Ausgieß-Schnabelbereich 38 für das Eiweiß fließt, während gleichzeitig das Eigelb am Rückhalteelement 20 an dessen konkaver Innenfläche 22 zurückgehalten wird. Nach dem Ausgießen des Eiweiß wird dann die Auffangschale 12 im Uhrzeigersinn über die horizontale Lage hinaus verschwenkt, so dass das am Rückhalteelement 20 zurückgehaltene Eigelb entlang der Rinne 30 zum Ausgieß-Schnabelbereich 34 fließt und von dort aus der Auffangschale 12 ausgeben werden kann.

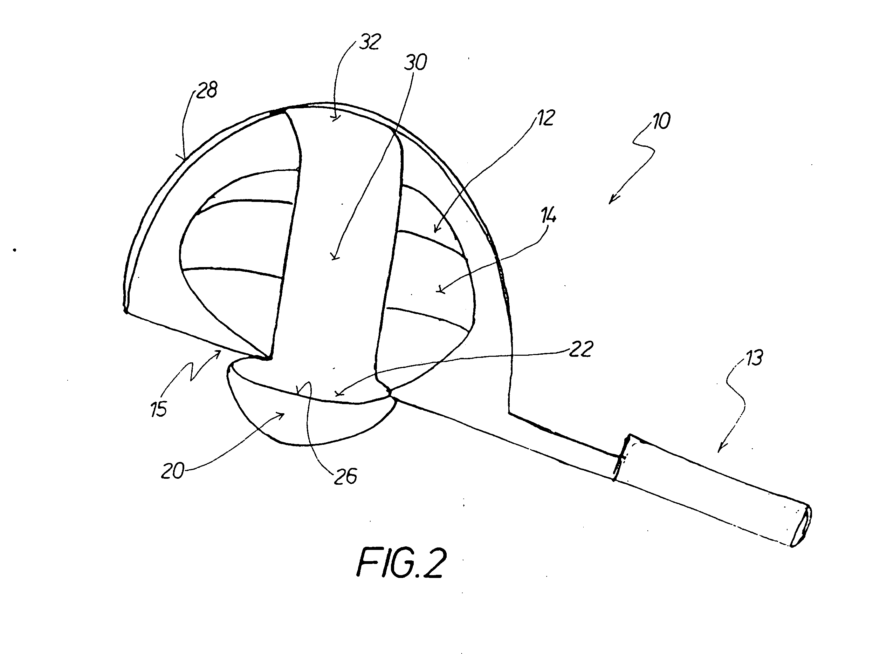

Figur 2 zeigt eine zweite Ausbildung der Trenn-Vorrichtung 10, die eine Auffangschale 12 aufweist, von der ein Handgriff 13 seitlich wegsteht. Mit der Bezugsziffer 14 ist der Boden der Auffangschale 12 bezeichnet.

Von einem Randabschnitt 15 der Auffangschale 12 steht ein Rückhalteelement 20 für das Eigelb eines aufgeschlagenen rohen Eies nach oben.

Bei der Ausbildung gemäß Figur 2 ist der besagte Randabschnitt 15 geradlinig geformt und steht der Handgriff 13, mit dem geradlinigen Randabschnitt 15 fluchtend, von der Auffangschale 12 seitlich weg.

Das Rückhalteelement 20 ist löffelabschnittförmig mit einer das Eigelb zurückhaltenden Innenfläche 22 ausgebildet. Die Innenfläche 22 ist in zum Boden 14 der Auffangschale parallelen und in dazu senkrechten Ebenen jeweils konkav profiliert. Das Rückhalteelement 20 weist einen Rand 26 auf, der zum Aufschlagen eines rohen Eies vorgesehen sein kann.

Der Boden 14 der Auffangschale 12 ist mit einer Rinne 30 für das Eigelb ausgebildet. Die Rinne 30 weist eine lichte Breite auf, die an die Breite des löffelabschnittförmigen Rückhalteelementes 20 an dessen Wurzel, d.h. im stufenlosen Übergang zwischen dem Rückhalteelement 20 und dem Boden 14 der Auffangschale 12, entspricht. Die Rinne 30 erstreckt sich von der das Eigelb zurückhaltenden Innenfläche 22 des löffelabschnittförmigen Rückhalteelementes 20 bis zum gegenüberliegenden Randabschnitt 32 der Auffangschale 12. Über diesen Abschnitt 32 ist es einfach möglich, das vom Eiweiß getrennte Eigelb aus der Auffangschale 12 auszugeben.

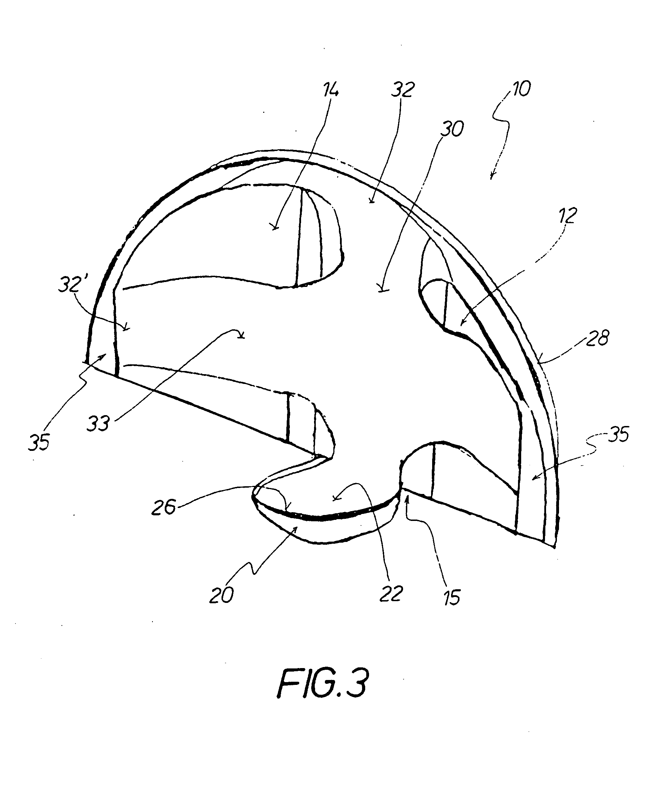

Figur 3 verdeutlicht in einer der Figur 2 ähnlichen perspektivischen Ansicht eine dritte Ausführungsform der Vorrichtung 10 zum Trennen des Eigelbs vom Eiweiß eines aufgeschlagenen rohen Eies, wobei gleiche Einzelheiten mit den selben Bezugsziffern wie in Figur 2 bezeichnet sind. Bei der Ausführungsform gemäß Figur 3 ist die Rinne 30 mit einer kreuzenden Querrinne 33 ausgebildet, die bspw. zur mechanischen Versteifung der Auffangschale 12 oder zur seitlichen Ausgabe des vom Eiweiß getrennten Eigelbs dient.

Die Vorrichtung 10 gemäß Figur 3 unterscheidet sich von der Vorrichtung 10 gemäß Figur 2 auch dadurch, dass sie keinen seitlich wegstehenden Handgriff besitzt, sondern zu ihrer einfachen Handhabung mit seitlichen Griffteilen 35 ausgebildet ist.

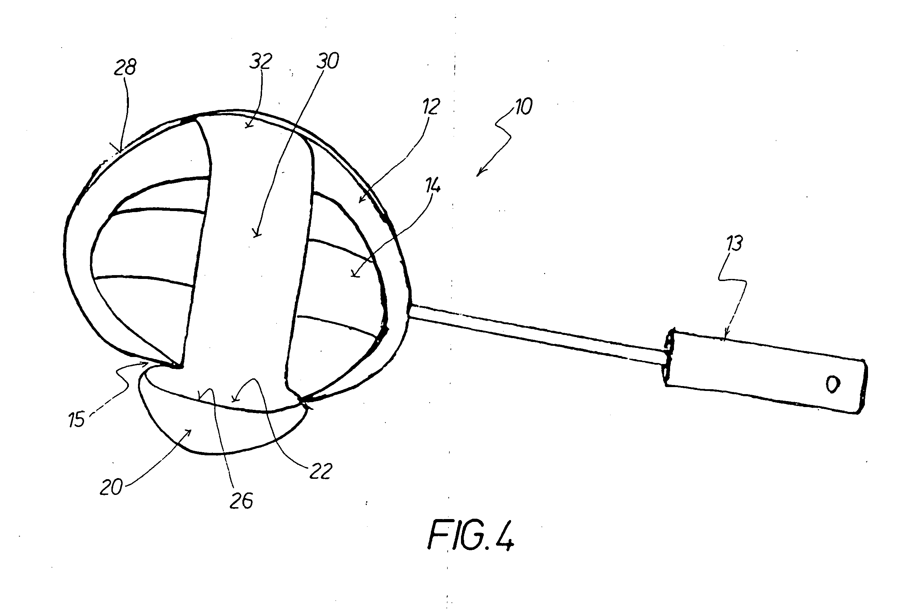

Figur 4 zeigt perspektivisch eine Ausbildung der Trenn-Vorrichtung 10, die sich von der Ausbildung gemäß Figur 2 dadurch unterscheidet, dass die Auffangschale 12 mit einem runden Rand 28 ausgebildet ist, von dem ein Handgriff 13 seitlich wegsteht.

Gleiche Einzelheiten sind auch in Figur 4 mit denselben Bezugsziffern wie in den Figuren 1 bis 3 bezeichnet, so dass es sich erübrigt, in Verbindung mit Figur 4 alle Einzelheiten noch einmal detailliert zu beschreiben.

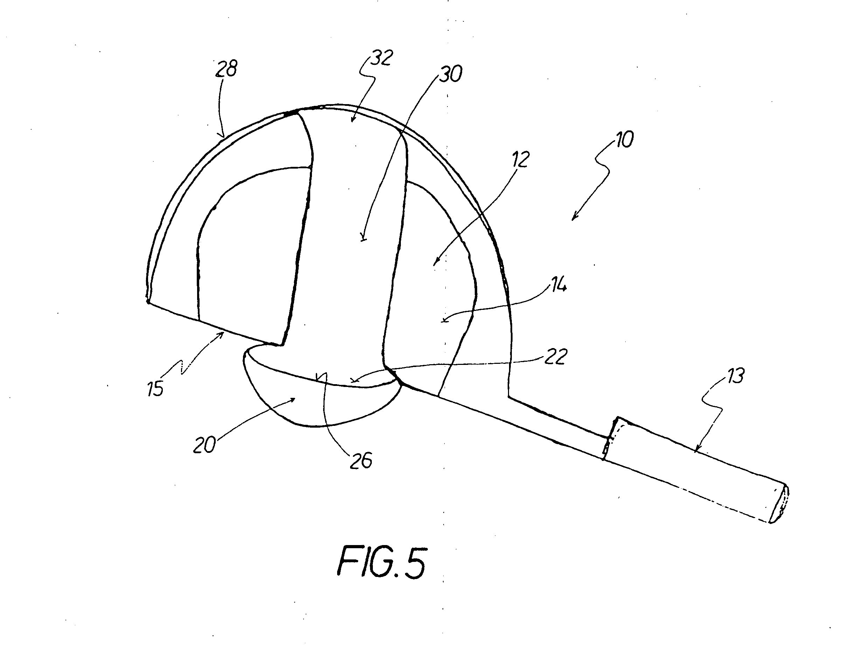

Figur 5 zeigt in einer perspektivischen Ansicht eine Ausbildung der Trenn-Vorrichtung 10, wobei der Randabschnitt 15 der Auffangschale 12 nicht in sich geschlossen sondern in der Nachbarschaft des Rückhalteelementes 20, d.h. an dieses angrenzend, offen ausgebildet ist.

Gleiche Einzelheiten sind in Figur 5 mit denselben Bezugsziffern wie in Figur 2 bezeichnet, so dass es sich erübrigt, in Verbindung mit Figur 5 alle Einzelheiten noch einmal detailliert zu beschreiben.

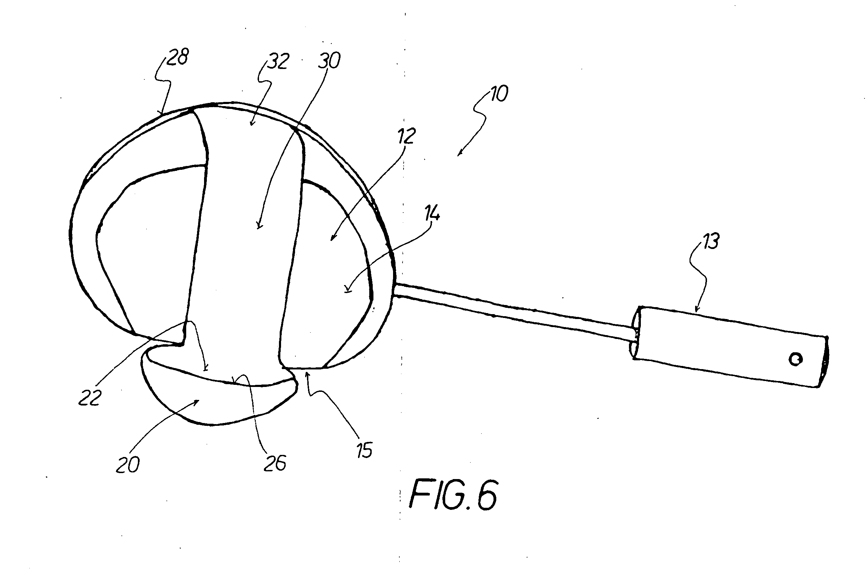

Figur 6 verdeutlicht perspektivisch eine Ausbildung der Trenn-Vorrichtung 10 - ähnlich der Ausführungsform der Vorrichtung 10 gemäß Figur 4 - wobei der Handgriff 13 jedoch gegen den offenen Randabschnitt 15 der Auffangschale 12 in einen mittleren Bereich zurück versetzt ist.

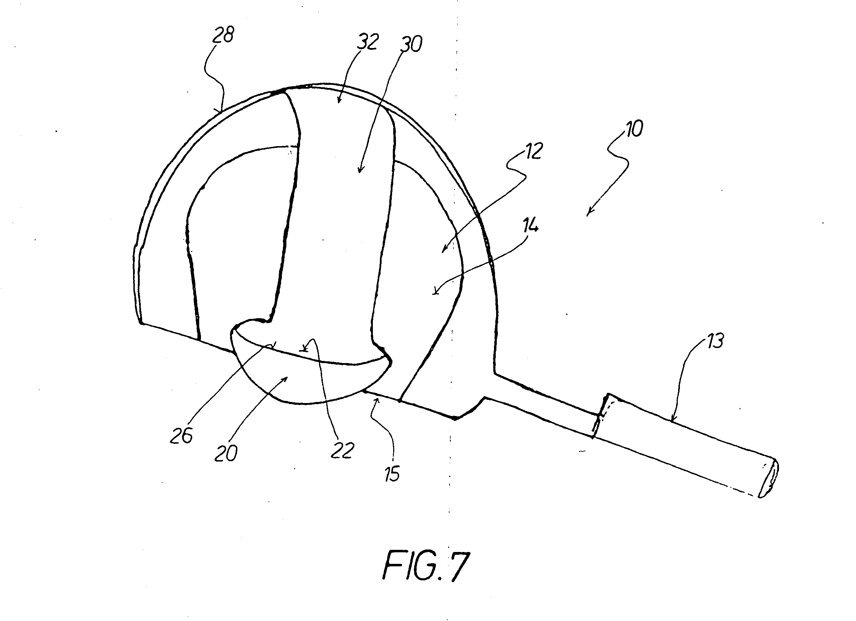

Figur 7 zeigt eine Ausbildung der Trenn-Vorrichtung 10 ähnlich den Ausführungsformen gemäß den Figuren 2 bis 6 mit einem offenen Randabschnitt 15, wobei das Rückhalteelement 20 jedoch in der Nachbarschaft diese Randabschnittes 15 gegen diesen in die Auffangschale 12 hinein geringfügig zurück versetzt vorgesehen ist.

Gleiche Einzelheiten sind auch in den Figuren 6 und 7 mit denselben Bezugsziffern wie in den Figuren 1 bis 5 bezeichnet, so dass es sich erübrigt, in Verbindung mit den Figuren 6 und 7 alle Einzelheiten noch einmal detailliert zu beschreiben.

### Bezugsziffernliste:

- 10: Vorrichtung
- 12: Auffangschale (von 10)
- 13: Handgriff (an 12)
- 14: Schalenboden (von 12)
- 15: Randabschnitt (von 12)
- 16: Schalenwandung (von 12)
- 18, 18': Aufschlagrandabschnitt (von 10 an 16, 20)
- 20: Rückhalteelement (von 10)
- 22: Innenfläche (von 20)
- 24: Rückenfläche (von 20)
- 26: Rand (von 20)
- 28: Verschlußrand (von 12)
- 30: Rinne (in 14)
- 32: Flächenabschnitt (von 16)
- 33: Querrinne (in 14)
- 34: Ausgieß-Schnabelbereich (an 16 bzw. 32)
- 35: Griffteile (von 12)
- 36: Flächenabschnitt (von 16)
- 38: Ausgieß-Schnabelbereich (an 16 bei 36)

## Patentansprüche

1. Vorrichtung zum Trennen des Eigelbs vom Eiweiß eines aufgeschlagenen rohen Eies, mit einer Auffangschale (12) für das aufgeschlagene Ei, die einen Schalenboden (14) und eine vom umlaufenden Rand des Schalenbodens (14) nach oben stehende Schalenwandung (16) aufweist, wobei vom Schalenboden (14) ein Rückhalteelement (20) für das Eigelb nach oben steht, wobei das Rückhalteelement (20) von der Schalenwandung (16) beabstandet ist,
**dadurch gekennzeichnet,**
**dass** die Auffangschale (12) mit dem Rückhalteelement (20) materialeinstückig ausgebildet ist.

2. Vorrichtung nach Anspruch 1,
**dadurch gekennzeichnet,**
**dass** das Rückhalteelement (20) in einem mittleren Bereich der Auffangschale (12) vorgesehen ist.

3. Vorrichtung nach Anspruch 1 oder 2,
**dadurch gekennzeichnet,**
**dass** das Rückhalteelement (20) zungenförmig mit einer das Eigelb zurück haltenden Innenfläche (22) ausgebildet ist.

4. Vorrichtung nach Anspruch 3,
**dadurch gekennzeichnet,**
**dass** die Innenfläche (22) des Rückhalteelementes (20) in zum Schalenboden (14) parallelen Ebenen konkav profiliert ist.

5. Vorrichtung nach Anspruch 1 oder 2,
**dadurch gekennzeichnet,**
**dass** das Rückhalteelement (20) löffelabschnittförmig ausgebildet ist, wobei die das Eigelb zurückhaltende Innenfläche (22) des Rückhalteelementes (20) in zum Schalenboden (14) parallelen Ebenen und in dazu senkrechten Ebenen jeweils konkav profiliert ist.

6. Vorrichtung nach einem der Ansprüche 1 bis 5,
**dadurch gekennzeichnet,**
**dass** die Schalenwandung (16) und/oder das Rückhalteelement (20) zum Aufschlagen eines rohen Eies einen scharfkantigen Aufschlagrandabschnitt (18, 18') aufweist.

7. Vorrichtung nach einem der Ansprüche 1 bis 6,
**dadurch gekennzeichnet,**
**dass** die Schalenwandung (16) der Auffangschale (12) mit einem umlaufenden Verschlußrand (28) für ein temporär luftdicht verrast- und verschließbares Behältnis ausgebildet ist.

8. Vorrichtung nach einem der Ansprüche 1 bis 7,
**dadurch gekennzeichnet,**
**dass** der Schalenboden (14) der Auffangschale (12) mit einer Rinne (30) für das Eigelb ausgebildet ist, die sich von der Innenfläche (22) des das Eigelb zurückhaltenden Rückhalteelementes (20) bis zum zugehörigen gegenüberliegenden Abschnitt (32) der Schalenwandung (16) der Auffangschale (12) erstreckt.

9. Vorrichtung nach einem der Ansprüche 1 bis 8,
**dadurch gekennzeichnet,**
**dass** die Schalenwandung (16) der Auffangschale (12) mit einem Ausgieß-Schnabelbereich (38) für das Eiweiß und/oder mit einem Ausgieß-Schnabelbereich (34) für das Eigelb ausgebildet ist.

10. Vorrichtung nach Anspruch 1,
**dadurch gekennzeichnet,**
**dass** von einem Randabschnitt (15) der Auffangschale (12) oder in der Nachbarschaft des Randabschnitts (15), gegen diesen in die Auffangschale (12) hinein zurück versetzt, das Rückhalteelement (20) für das Eigelb nach oben steht.

11. Vorrichtung nach Anspruch 10,
**dadurch gekennzeichnet,**
**dass** der Rand der Auffangschale (12) durch das Rückhalteelement (20) in sich geschlossen oder in der Nachbarschaft des Rückhalteelementes (20) offen ausgebildet ist.

12. Vorrichtung nach Anspruch 10,
**dadurch gekennzeichnet,**
**dass** die Auffangschale (12) mit einem geschlossenen Rand oder mit einem offenen Teilrand (15) ausgebildet ist, wobei das Rückhalteelement (20) von einem mittleren Bereich des Teilrandes (15) oder gegen diesen in die Auffangschale hinein zurück versetzt nach oben steht.

13. Vorrichtung nach einem der Ansprüche 1 bis 12,
**dadurch gekennzeichnet,**
**dass** die Auffangschale (12) mit mindestens einem Griffteil (35) ausgebildet ist.

14. Vorrichtung nach einem der Ansprüche 1 bis 12,
**dadurch gekennzeichnet,**
**dass** vom Rand der Auffangschale (12) ein Handgriff (13) wegsteht.

## Claims

1. Device for separating the egg yolk from the egg white of a raw egg which has been cracked open, having a collecting basin (12) for the cracked-open egg, the basin having a basin floor (14) and a basin wall (16), which projects upwards from the encircling periphery of the basin floor (14), wherein a retaining element (20) for the egg yoke projects upwards from the basin floor (14), and wherein the retaining element (20) is spaced apart from the basin wall (16),
**characterized**
**in that** the collecting basin (12) is formed integrally with the retaining element (20).

2. Device according to Claim 1,
**characterized**
**in that** the retaining element (20) is provided in a central region of the collecting basin (12).

3. Device according to Claim 1 or 2,
**characterized**
**in that** the retaining element (20) is of tongue-like design with an inner surface (22) which retains the egg yolk.

4. Device according to Claim 3,
**characterized**
**in that** the inner surface (22) of the retaining element (20) is profiled concavely in planes parallel to the basin floor (14).

5. Device according to Claim 1 or 2,
**characterized**
**in that** the retaining element (20) is designed in the form of a spoon portion, wherein the egg-yoke-retaining inner surface (22) of the retaining element (20) is profiled concavely in each case in planes parallel to the basin floor (14) and in planes perpendicular thereto.

6. Device according to one of Claims 1 to 5,
**characterized**
**in that** the basin wall (16) and/or the retaining element (20) have/has a sharp-edged cracking-periphery portion (18, 18') on which a raw egg can be cracked open.

7. Device according to one of Claims 1 to 6,
**characterized**
**in that** the wall (16) of the collecting basin (12) is designed with an encircling closure periphery (28) for a container which can be temporarily latched and closed in an air-tight manner.

8. Device according to one of Claims 1 to 7,
**characterized**
**in that** the floor (14) of the collecting basin (12) is designed with a channel (30) which is intended for the egg yoke and extends from the inner surface (22) of the egg-yoke-retaining element (20) to the associated opposite portion (32) of the wall (16) of the collecting basin (12).

9. Device according to one of Claims 1 to 8,
**characterized**
**in that** the wall (16) of the collecting basin (12) is designed with a pour-out lip region (38) for the egg white and/or with a pour-out lip region (34) for the egg yoke.

10. Device according to Claim 1,
**characterized**
**in that** the retaining element (20) for the egg yoke projects upwards from a peripheral portion (15) of the collecting basin (12) or in the vicinity of the peripheral portion (15), in a manner set back into the collecting basin (12) in relation to the peripheral portion.

11. Device according to Claim 10,
**characterized**
**in that** the periphery of the collecting basin (12) is rendered continuous by the retaining element (20) or is designed to be open in the vicinity of the retaining element (20).

12. Device according to Claim 10,
**characterized**
**in that** the collecting basin (12) is designed with a closed periphery or with an open sub-periphery (15), wherein the retaining element (20) projects upwards from a central region of the sub-periphery (15) or in a manner set back into the collecting basin in relation to the same.

13. Device according to one of Claims 1 to 12,
**characterized**
**in that** the collecting basin (12) is designed with at least one grip part (35).

14. Device according to one of Claims 1 to 12,
**characterized**
**in that** a handle (13) projects away from the periphery of the collecting basin (12).

## Revendications

1. Dispositif de séparation du jaune d'un blanc d'un oeuf cru cassé, comprenant une coque de réception (12) pour l'oeuf cassé, qui présente un fond de coque (14) et une paroi de coque (16) s'étendant vers le haut depuis le bord périphérique du fond de coque (14), un élément de retenue (20) pour le jaune d'oeuf faisant saillie vers le haut depuis le fond de coque (14), l'élément de retenue (20) étant espacé de la paroi de coque (16),
**caractérisé en ce que**
la coque de réception (12) est réalisée avec l'élément de retenue (20) d'une seule pièce en un même matériau.

2. Dispositif selon la revendication 1,
**caractérisé en ce que**
l'élément de retenue (20) est prévu dans une région centrale de la coque de réception (12).

3. Dispositif selon la revendication 1 ou 2,
**caractérisé en ce que**
l'élément de retenue (20) est réalisé en forme de langue avec une surface interne (22) retenant le jaune d'oeuf.

4. Dispositif selon la revendication 3,
**caractérisé en ce que**
la surface intérieure (22) de l'élément de retenue (20) est profilée de manière concave dans des plans parallèles au fond de coque (14).

5. Dispositif selon la revendication 1 ou 2,
**caractérisé en ce que**
l'élément de retenue (20) est réalisé en forme de portion de louche, la surface intérieure (22) de l'élément de retenue (20), retenant le jaune d'oeuf, étant profilée de manière concave respectivement dans des plans parallèles au fond de coque (14) et dans des plans perpendiculaires à celui-ci.

6. Dispositif selon l'une quelconque des revendications 1 à 5,
**caractérisé en ce que**
la paroi de coque (16) et/ou l'élément de retenue (20) présente, pour casser un oeuf cru, une portion de bord de cassure à arête vive (18, 18').

7. Dispositif selon l'une quelconque des revendications 1 à 6,
**caractérisé en ce que**
la paroi de coque (16) de la coque de réception (12) est réalisée avec un bord de fermeture périphérique (28) pour un récipient encliquetable et refermable temporairement étanche à l'air.

8. Dispositif selon l'une quelconque des revendications 1 à 7,
**caractérisé en ce que**
le fond de coque (14) de la coque de réception (12) est réalisé avec une rainure (30) pour le jaune d'oeuf, laquelle s'étend depuis la surface intérieure (22) de l'élément de retenue (20) retenant le jaune d'oeuf jusqu'à la portion opposée associée (32) de la paroi de coque (16) de la coque de réception (12).

9. Dispositif selon l'une quelconque des revendications 1 à 8,
**caractérisé en ce que**
la paroi de coque (16) de la coque de réception (12) est réalisée avec une région de bec verseur (38) pour le blanc d'oeuf et /ou avec une région de bec verseur (34) pour le jaune d'oeuf.

10. Dispositif selon la revendication 1,
**caractérisé en ce que**
l'élément de retenue (20) pour le jaune d'oeuf fait saillie vers le haut depuis une portion de bord (15) de la coque de réception (12) ou à proximité de la portion de bord (15), de manière décalée en arrière vers l'intérieur vers celui-ci dans la coque de réception (12).

11. Dispositif selon la revendication 10,
**caractérisé en ce que**
le bord de la coque de réception (12) est réalisé par l'élément de retenue (20) de manière fermée en soi ou ouverte à proximité de l'élément de retenue (20).

12. Dispositif selon la revendication 10,
**caractérisé en ce que**
la coque de réception (12) est réalisée avec un bord fermé ou avec un bord partiel ouvert (15), l'élément de retenue (20) faisant saillie vers le haut depuis une région centrale du bord partiel (15) ou de manière décalée en arrière vers l'intérieur vers celui-ci dans la coque de réception.

13. Dispositif selon l'une quelconque des revendications 1 à 12,
**caractérisé en ce que**
la coque de réception (12) est réalisée avec au moins une partie de préhension (35).

14. Dispositif selon l'une quelconque des revendications 1 à 12,
**caractérisé en ce**
**qu'**une poignée (13) fait saillie depuis le bord de la coque de réception (12).
